# EUROPÄISCHE PATENTSCHRIFT

(11) **EP 1 431 740 B1**
(45) Veröffentlichungstag und Bekanntmachung des Hinweises auf die Patenterteilung: **08.03.2006**
(21) Anmeldenummer: 02028243.0
(22) Anmeldetag: 16.12.2002
(51) Int. Cl.: G01M 7/02, G01M 15/00

(54) **Messvorrichtung zum berührungslosen Erfassen von Schwingungen eines Objektes**
Measuring device for non-contact recording of object vibrations
Dispositif de mesure pour l'enregistrement sans contact des vibrations d'un objet

(43) Veröffentlichungstag der Anmeldung: 23.06.2004
(73) Patentinhaber: Polytec GmbH, 76337 Waldbronn (DE)
(72) Erfinder: Selbach, Helmut, Dr., 76337 Waldbronn (DE); Armbruster, Bernd, Dr., 76137 Karlsruhe (DE)
(74) Vertreter: Kaiser, Magnus

(56) Entgegenhaltungen:
- WO-A-93/15386
- US-A- 4 621 263
- US-A- 5 396 801

## Beschreibung

Die Erfindung betrifft eine Messvorrichtung sowie ein Verfahren zum berührungslosen Erfassen von Schwingungen eines Objektes nach den Oberbegriffen der Patentansprüche 1 und 10.

Demnach umfasst die Messvorrichtung mindestens ein Laser-Interferometer, mindestens eine Abtasteinrichtung, die den Messstrahl des Laser-Interferometers zur Erzeugung einer Abtastbewegung auf verschiedene Messpunkte des Objektes richtet, eine Datenerfassungseinrichtung, die mit dem Laser-Interferometer und mit der Abtasteinrichtung zusammenwirkt, um die vom Laser-Interferometer gemessenen Schwingungsdaten mit Ortsdaten des jeweiligen Messpunktes zu korrelieren, sowie eine Anzeige- oder Auswerteeinrichtung zum ortsaufgelösten Anzeigen oder Auswerten der mit den Ortsdaten korrelierten Schwingungsdaten.

Schwingungen, insbesondere Vibrationen, werden konventionell dadurch gemessen, dass Beschleunigungssensoren auf die Oberfläche des Objekts aufgebracht und deren Signale in Korrelation mit den Ortsdaten der jeweiligen Messpunkte ausgewertet werden. Sehr oft sind allerdings solche Beschleunigungssensoren nicht einsetzbar. Beispielsweise wenn sehr kleine Strukturen, wie Drähte oder Schreib- und Leseköpfe von Festplatten gemessen werden sollen, wenn die Objekte sehr heiß oder sehr kalt sind, oder immer dann, wenn die Masse des Beschleunigungssensors die Schwingungsform des Objektes verfälscht, wie insbesondere bei leichten Objekten und bei weichen Strukturen, kommen konventionelle Sensoren nicht in Betracht. Auch rotierende Objekte, wie beispielsweise Festplattenlaufwerke, Räder von Kraftfahrzeugen oder Bremsscheiben können mit herkömmlichen Beschleunigungssensoren nicht vermessen werden.

Es gibt daher seit einiger Zeit optische Verfahren zum Erfassen von Schwingungen eines Objektes, da es mit diesen möglich ist, die Messung ohne mechanischen Kontakt mit dem Objekt durchzuführen. Hier bietet insbesondere die optische Vermessung des Objektes mittels eines Laser-Interferometers nicht nur eine vorteilhaft hohe Messempfindlichkeit, sondern auch eine weite Bandbreite der zu messenden Schwingungsformen. Im allgemeinen wird ein Laser-Doppler-Vibrometer eingesetzt, bei dem ein Messpunkt auf dem Objekt mit kohärentem Laserlicht beleuchtet wird. Die Schwingungsbewegung der Objektoberfläche bewirkt eine Dopplerverschiebung der Frequenz des von der Oberfläche reflektierten Lichtes. Eine Analyse der Frequenzverschiebung liefert die gewünschten Schwingungsdaten, da aus der Frequenzverschiebung die jeweiligen Geschwindigkeitswerte und aus deren Verlauf auch die Beschleunigungswerte des Objekts am Messpunkt berechnet werden können. Der prinzipielle Aufbau einer solchen Messvorrichtung ist beispielsweise in der DE-Fachzeitschrift "Technisches Messen - tm" 57 (1990), Seiten 335 bis 345 beschrieben.

Eine Messvorrichtung der eingangs genannten Art ist beispielsweise aus der WO93/15386 bekannt. Dort ist im einzelnen beschrieben, wie ein scannendes Laser-Doppler-Vibrometer zur Erfassung von Schwingungszuständen eines Objektes verwendet werden kann. Die dort vorhandene Abtasteinrichtung ist in einen Messkopf des Interferometers integriert und besteht im wesentlichen aus einem beweglichen Ablenkspiegel für den Laserstrahl, mit Hilfe dessen der Laserstrahl in einer scannenden Bewegung auf verschiedene Messpunkte des Objekts gerichtet wird. Diese Technik wird verbreitet eingesetzt und ist an sich unproblematisch.

In der US-A-4,621,263 ist ein eindimensionales System zur Messung von Vibrationen mittels eines Vibrationstelemeters beschrieben. Hierbei werden vordefinierte Messpunkte über ein Traversiersystem mit einer fest installierten Laufschiene von einem Messkopf angefahren. Dieses bekannte System dient dazu, mit Hilfe eines gemessenen Schwingungsspektrums Fehler in Anlagen, insbesondere einer Kernkraftanlage zu erkennen.

In vielen Anwendungsfällen ist es notwendig, die Schwingungszustände der einzelnen Messpunkte nicht nur in einer Dimension, also entlang der Richtung des Messstrahls zu erfassen, sondern Schwingungsdaten für die Messpunkte in allen drei Raumrichtungen aufzunehmen. Für solche dreidimensionalen Messungen wird in der WO 93/15386 vorgeschlagen, drei Laser-Doppler-Vibrometer mit Messstrahlen zu verwenden, die aus unterschiedlichen Raumrichtungen auf die jeweiligen Messpunkte gerichtet werden, um letztendlich dreidimensionale Schwingungsdaten aufnehmen zu können.

Allerdings müssen dann die Ablenkspiegel für die Laserstrahlen sorgfältig synchronisiert werden, was an sich schon recht aufwendig ist. Hinzu kommt, dass dann, wenn die Messpunkte weit auseinanderliegen, oder gar eine gekrümmte Oberfläche des Objektes zu vermessen ist, der Fokus für die einzelnen Messpunkte laufend verändert werden muss. Außerdem ist es nicht möglich, an Stellen zu messen, die nicht im direkten Scanbereich der Ablenkspiegel für die Laserstrahlen liegen.

Der vorliegenden Erfindung liegt daher die Aufgabe zugrunde, eine Messvorrichtung der eingangs genannten Art sowie ein entsprechendes Verfahren insbesondere hinsichtlich des Abtastvorgangs, mit dem die Messstrahlen auf unterschiedliche Messpunkte auf dem Objekt gerichtet werden, zu verbessern.

Gelöst ist diese Aufgabe durch eine Messvorrichtung mit den Merkmalen des Patentanspruchs 1 sowie durch ein Verfahren mit den Merkmalen des Patentanspruchs 10.

Vorteilhafte Ausgestaltungen der erfindungsgemäßen Messvorrichtung finden sich in den Patentansprüchen 2 bis 9; eine bevorzugte Weiterbildung des erfindungsgemäßen Verfahrens ist in Patentanspruch 11 niedergelegt.

Nach der Erfindung wird die Abtastbewegung also durch eine programmgesteuert bewegliche Halterung, insbesondere durch den Haltearm eines Industrieroboters oder die Positionierelemente eines Portalroboters erzeugt, auf welcher Halterung wenigstens ein Messkopf des mindestens einen Laser-Interferometers befestigt ist. Der für die vorliegende Erfindung verwendete Begriff "Abtasteinrichtung" umfasst nicht nur die programmgesteuerte Halterung bzw. den Roboter, sondern auch dessen Steuerung mit den dazu notwendigen Programmabläufen und Datenspeichern, wie auch die Abtasteinrichtung im Stand der Technik nicht nur die Ablenkspiegel, sondern auch deren Steuereinrichtungen umfasst. Bei einer erfindungsgemäßen Vorrichtung kann also beispielsweise ein Computer einerseits mit einem Industrieroboter und andererseits mit einem Laser-Doppler-Vibrometer zusammenarbeiten, wobei der Computer dann sowohl die Datenerfassungseinrichtung als auch Teile der Abtasteinrichtung, nämlich deren Steuerung, beinhaltet.

Die bewegliche Halterung fährt den Messkopf an die verschiedenen Messpunkte heran, und zwar so, dass an jedem Messpunkt ein vorgewählter Abstand zum Objekt eingehalten wird. Hierzu ist es noch nicht einmal in jedem Fall notwendig, zusätzliche Vorrichtungen zur Entfernungsmessung zu verwenden, nämlich dann, wenn die Ortsdaten der Meßpunkte sich aus bereits in der Steuerung der Abtasteinrichtung vorhandenen, aus numerischen Konstruktionsdaten des Meßobjekts stammenden Daten errechnen lassen.

Neben dem enormen Vorteil, der sich durch einen möglichen festen Arbeitsabstand ergibt, wodurch eine Veränderbarkeit des Fokus überflüssig wird, können nun erstmals auch komplexe Objektoberflächen interferometrisch auf ihr Schwingungsverhalten geprüft werden. Auch Hinterschneidungen oder Abdeckungen sowie um eine Abkantung herum geführte Oberflächen können durch entsprechendes Bewegen des Haltearms bzw. der programmgesteuerten Halterung vermessen werden.

Insbesondere eine dreidimensionale Messung bereitet keine besonderen Schwierigkeiten mehr, da die erfindungsgemäße Halterung problemlos drei Messköpfe in fester gegenseitiger Zuordnung halten und an die jeweiligen Messpunkte heranführen kann. Es ist selbstverständlich auch möglich, einen einzelnen Messkopf mit drei in unterschiedlichen Raumrichtungen auf den Messpunkt gerichteten Laserstrahlen zu verwenden, oder aber, was die Konstruktion besonders einfach macht, einen einzelnen Meßkopf mit nur einem Laserstrahl in zeitlich naher Folge nacheinander aus drei unterschiedlichen Raumrichtungen auf ein und denselben Meßpunkt zu richten. Die im Stand der Technik bei der dreidimensionalen Messung vorhandenen Abbildungsfehler insbesondere in den Randbereichen der abzutastenden Fläche entfallen mit der Erfindung vollständig, da die programmgesteuert bewegliche Halterung den Messkopf oder die drei Messköpfe immer in optimalem Abstand und optimaler Orientierung an die Messpunkte heranfahren kann.

Zur Erzielung von optimalen Ergebnissen hat es sich als vorteilhaft erwiesen, den Öffnungswinkel zwischen den drei zur dreidimensionalen Messung notwendigen Messstrahlen größer als 20°, zumindest aber größer als 12° zu wählen.

Besondere Vorteile ergeben sich dann, wenn die erfindungsgemäße Abtasteinrichtung und die Datenerfassungseinrichtung mit einer Anzeigeeinheit zusammenarbeiten, die ein Videobild des Messobjekts zeigt und die Ortsdaten der Messpunkte auf dem Vordergrund dieses Videobilds darstellt. Insbesondere ist es dadurch möglich, die Ortsdaten der Messpunkte, welche die programmgesteuert bewegliche Halterung benötigt, um den Messkopf oder die Messköpfe an die einzelnen Messpunkte heranfahren zu können, anhand des Videobildes des Messobjekts frei vorzuwählen und gegebenenfalls im Teach-in-Verfahren gleich in die Steuerung der Abtasteinrichtung einzuprogrammieren. Dies stellt nicht nur eine intuitive Bedienbarkeit der Messvorrichtung sicher, sondern ermöglicht darüber hinaus auch, das Messpunktraster dem Verlauf der Objektoberfläche und der kritischen Felder, Linien oder Punkte des Objekts individuell anzupassen.

Ein Ausführungsbeispiel der Erfindung wird im folgenden anhand der beigefügten Zeichnungen näher erläutert. Es zeigen:
- Figur 1: ein erstes Ausführungsbeispiel der Erfindung in schematischer Darstellung;
- Figur 2: ein zweites Ausführungsbeispiel, in schematischer Detaildarstellung.

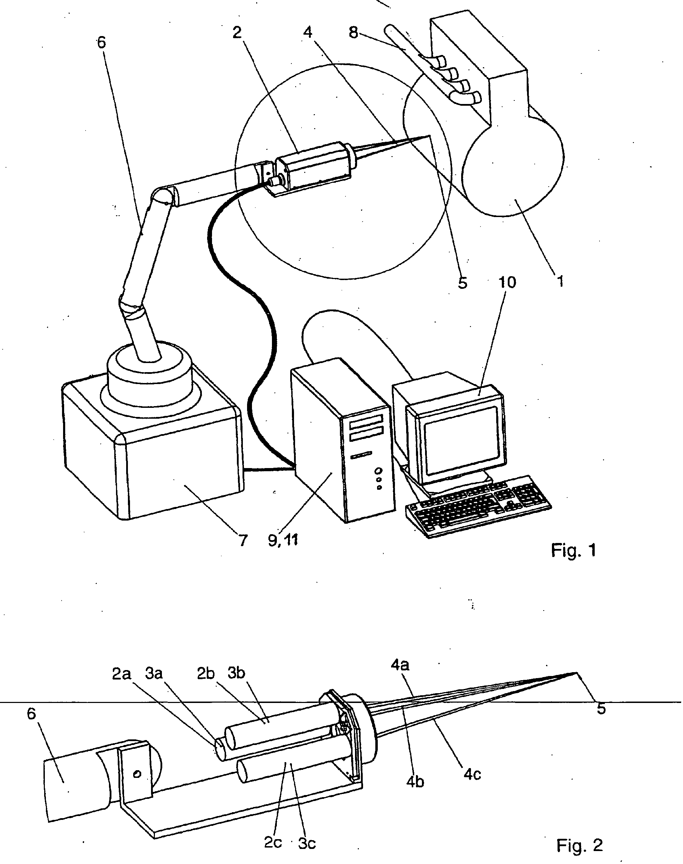

Figur 1 zeigt eine erfindungsgemäße Messvorrichtung, mit der Schwingungen an einem Motorblock 1 eines Kraftfahrzeugs gemessen werden. Ein Laser-Doppler-Vibrometer 2 mit insgesamt drei Messköpfen 3, die jeweils einen Messstrahl 4 auf einen Messpunkt 5 auf dem Objekt richten, ist an einem Haltearm 6 eines Industrieroboters 7 befestigt und kann von diesem an unterschiedlichste Punkte des Motorblocks 1 - durch Wählen geeigneter Einfallswinkel auch hinter den Auspuffkrümmern 8 - gerichtet werden. Der Abstand zwischen dem Laser-Doppler-Vibrometer 2 und den jeweiligen Messpunkten 5 bleibt dabei immer konstant. Da die drei Messköpfe 3 in ihrer Zuordnung fest im Gehäuse des Laser-Doppler-Vibrometers 2 sitzen, ergeben sich beim Scannen keinerlei Unterschiede im Fokus oder im Auftreffwinkel der einzelnen Messstrahlen 4 auf den jeweiligen Messpunkt 5, so dass die Scanbewegung gegenüber dem bisher bekannten Stand der Technik wesentlich einfacher durchzuführen ist, wobei zusätzlich der Korrekturbedarf beim Auswerten deutlich abnimmt.

Figur 2 zeigt eine andere Ausführungsform, wobei hier drei separate Messköpfe 3a, 3b und 3c die Messstrahlen 4a, 4b, 4c auf den jeweiligen Messpunkt 5 richten. Auch hier sind die Messköpfe 3a, 3b, 3c in fester gegenseitiger Zuordnung auf dem Haltearm 6 befestigt. Sie werden von diesem derart an die einzelnen Messpunkte 5 herangefahren, dass die geometrischen Randbedingungen, wie der Abstand zwischen Messkopf und Messpunkt sowie der Öffnungswinkel der Messstrahlen 4a, 4b, 4c jeweils identisch bleiben. Wie hierbei unmittelbar einleuchtet, zeigt die Erfindung ihr großes Vereinfachungspotential insbesondere bei dreidimensionalen Schwingungsmessungen. Jedoch auch schon die Möglichkeit, Objekte mit komplexer Oberfläche vermessen zu können, bietet große Vorteile gegenüber dem bisherigen Stand der Technik.

Neben den in den Figuren 1 und 2 dargestellten Messvorrichtungen zur dreidimensionalen Vermessung von Schwingungen am Motorblock 1 kann eine dreidimensionale Messung erfindungsgemäß auch so vorgenommen werden, dass lediglich ein Laser-Doppler-Vibrometer mit nur einem Messstrahl am Haltearm 6 des Industrieroboters 7 befestigt wird und nacheinander aus unterschiedlichen Raumrichtungen auf den Messpunkt 5 gerichtet wird. Durch Korrelieren dieser drei hintereinander aufgenommenen Messungen wird eine dreidimensionale Auswertung des Schwingungsverhaltens am Messpunkt 5 ermöglicht.

Wie wiederum in Figur 1 dargestellt ist, meldet die Steuerung 11 des Haltearms 6 des Industrieroboters 7 die Ortskoordinaten der Messpunkte 5 an eine Datenerfassungseinrichtung 9, welche (durch eine gestrichelte Linie angedeutet) mit dem Laser-Doppler-Vibrometer 2 zum Einlesen der Schwingungsdaten verbunden ist. Ein handelsüblicher Computer fungiert gleichzeitig als Datenerfassungseinrichtung 9, Steuerung 11 der Abtasteinrichtung sowie als Auswerteeinrichtung und gibt die Daten an eine Anzeigeeinrichtung 10, mit oder ohne vorherige Auswertung, weiter. Gleichzeitig kann der Bediener auf einem auf der Anzeigeeinrichtung 10 hinterlegten Videobild des Objekts einzelne Messpunkte 5 oder Gruppen von Messpunkten auswählen, welche wieder zurück an die Steuerung 11 des Industrieroboters 7 gegeben wird. Der Industrieroboter 7 kann auch derart lokal programmiert werden, dass der Haltearm 6 manuell an ausgewählte Messpunkte 5 herangefahren und die so erhaltenen Positionen in der Steuerung 11 hinterlegt. Wenn die Geometriedaten des Motorblocks 1 bekannt sind und in die Steuerung 11 des Industrieroboters 7 eingelesen werden, kann dieser Prozess auch automatisiert durchgeführt werden. Der Bediener wählt dann nur noch Messpunkte 5 oder Gruppen von Messpunkten an der Anzeigeeinrichtung 10 aus.

## Patentansprüche

1. Messvorrichtung zum berührungslosen Erfassen von Schwingungen eines Objektes,
mit mindestens einem Laser-Interferometer (2, 3),
mit einer Abtasteinrichtung (6, 7, 11), die den Messstrahl (4) des Laser-Interferometers (2, 3) zur Erzeugung einer Abtastbewegung auf verschiedene Messpunkte (5) des Objekts (1) richtet,
mit einer Datenerfassungseinrichtung (9), die mit dem Laser-Interferometer (2, 3) und mit der Abtasteinrichtung (6, 7, 11) zusammenwirkt, um die vom Laser-Interferometer (2, 3) gemessenen Schwingungsdaten mit von der Abtasteinrichtung (11) erhaltenen Ortsdaten des jeweiligen Messpunktes (5) zu korrelieren, und mit einer Auswerte- oder Anzeigeeinrichtung (10) zum ortsaufgelösten Auswerten oder Anzeigen der mit den Ortsdaten korrelierten Schwingungsdaten, wobei die Abtasteinrichtung eine programmgesteuert bewegliche Halterung (6) umfasst, an der wenigstens ein Messkopf (3) des Laserinterferometers befestigt ist und mit der der Messkopf (3) zu den verschiedenen Messpunkten (5) bewegbar ist,
**dadurch gekennzeichnet,**
**dass** die Abtasteinrichtung (6, 11) so programmiert ist, dass der Messkopf (3) des Laser-Interferometers jeweils in einen vorgewählten festen Abstand zum Objekt (1) an die einzelnen Messpunkte (5) herangefahren wird.

2. Messvorrichtung nach Anspruch 1,
**dadurch gekennzeichnet,**
**dass** das Laser-Interferometer ein Laser-Doppler-Vibrometer ist.

3. Messvorrichtung nach einem der Ansprüche 1 oder 2,
**dadurch gekennzeichnet,**
**dass** das oder die Laser-Interferometer für jeden Messpunkt (5) drei aus unterschiedlichen Winkeln auf das Objekt (1) auftreffende Messstrahlen (4a, 4b, 4c) erzeugt bzw. erzeugen.

4. Messvorrichtung nach den Ansprüchen 2 und 3,
**dadurch gekennzeichnet,**
**dass** das mindestens eine Laser-Interferometer aus drei Laser-Doppler-Vibrometern besteht.

5. Messvorrichtung nach einem der Ansprüche 3 oder 4,
**dadurch gekennzeichnet,**
**dass** der Öffnungswinkel zwischen den drei Messstrahlen (4a, 4b, 4c) größer als 12°, insbesondere größer als 20° ist.

6. Messvorrichtung nach einem der Ansprüche 1 bis 5,
**dadurch gekennzeichnet,**
**dass** die in der Abtasteinrichtung (11) vorhandenen Ortsdaten der Messpunkte (5) auf dem Vordergrund eines Videobildes des Messobjekts (1) in der Anzeigeeinheit (10) darstellbar sind.

7. Messvorrichtung nach Anspruch 6,
**dadurch gekennzeichnet,**
**dass** die Anzeigeeinheit (10) und die Abtasteinrichtung (6, 7, 11) so zusammenwirkend ausgestaltet sind, dass die in der Abtasteinrichtung (11) vorhandenen Ortsdaten der Messpunkte (5) anhand des Videobildes des Messobjekts (1) frei vorwählbar sind.

8. Messvorrichtung nach einem der Ansprüche 1 bis 7,
**dadurch gekennzeichnet,**
**dass** die Halterung (6) der Haltearm eines Industrieroboters (7) ist.

9. Messvorrichtung nach einem der Ansprüche 1 bis 7,
**dadurch gekennzeichnet,**
**dass** die Halterung (6) aus den Positionierelementen eines Portalroboters gebildet ist.

10. Verfahren zum berührungslosen Erfassen von Schwingungen eines Objektes, mit den Verfahrensschritten:
- Richten mindestens eines Messstrahls mindestens eines Laser-Interferometers auf verschiedene Messpunkte auf dem Objekt;
- Erfassen der vom Laser-Interferometer erhaltenen Schwingungsdaten und Korrelieren dieser Schwingungsdaten mit den Ortsdaten der Messpunkte;
- Anzeigen und/oder Auswerten der mit den Ortsdaten korrelierten Schwingungsdaten,
- wobei mindestens ein auf einer programmgesteuert bewegbaren Halterung befestigter Messkopf des mindestens einen Laser-Interferometers mittels der Halterung an die Messpunkte bewegt wird,
**dadurch gekennzeichnet,**
**dass** der Messkopf jeweils in einen vorgewählten festen Abstand zum Objekt an die einzelnen Messpunkte herangefahren wird.

11. Verfahren nach Anspruch 10,
**dadurch gekennzeichnet,**
**dass** ein Videobild des Objektes erzeugt wird und die Messpunkte anhand des Videobildes ausgewählt werden.

## Claims

1. Measuring arrangement for the non-contact recording of vibrations of an object,
having at least one laser interferometer (2, 3),
having a scanning device (6, 7, 11) which to generate a scanning movement directs the measuring beam (4) of the laser interferometer (2, 3) onto different measurement points (5) of the object (1),
having a data recording device (9), which cooperates with the laser interferometer (2, 3) and with the scanning device (6, 7, 11) in order to correlate the vibration data measured by the laser interferometer (2, 3) with positional data of the measurement point (5) in question obtained by the scanning device (11),
and having an evaluation or display device (10) for the position-resolved evaluation or display of the vibration data correlated with the positional data,
the scanning device comprising a holding means (6) which is movable under program control, on which at least one measuring head (3) of the laser interferometer is mounted and with which the measuring head (3) is movable to the different measurement points (5),
**characterised in that**
the scanning device (6, 11) is so programmed that the measuring head (3) of the laser interferometer is moved to the individual measurement points (5) in each case at a pre-selected fixed distance from the object (1).

2. Measuring arrangement according to claim 1,
**characterised in that**
the laser interferometer is a laser Doppler vibrometer.

3. Measuring arrangement according to either one of claims 1 and 2,
**characterised in that**
the laser interferometer(s) generate(s) for each measurement point (5) three measuring beams (4a, 4b, 4c) which are incident on the object (1) from different angles.

4. Measuring arrangement according to claims 2 and 3,
**characterised in that**
the at least one laser interferometer consists of three laser Doppler vibrometers.

5. Measuring arrangement according to either one of claims 3 and 4,
**characterised in that**
the angle between the three measuring beams (4a, 4b, 4c) is greater than 12°, especially greater than 20°.

6. Measuring arrangement according to any one of claims 1 to 5,
**characterised in that**
the positional data of the measurement points (5) present in the scanning device (11) can be displayed in the display unit (10) in the foreground of a video image of the object (1) being measured.

7. Measuring arrangement according to claim 6,
**characterised in that**
the display unit (10) and the scanning device (6, 7, 11) are configured to so cooperate with one another that the positional data of the measurement points (5) present in the scanning device (11) are freely preselectable by reference to the video image of the object (1) being measured.

8. Measuring arrangement according to any one of claims 1 to 7,
**characterised in that**
the holding means (6) is the holding arm of an industrial robot (7).

9. Measuring arrangement according to any one of claims 1 to 7,
**characterised in that**
the holding means (6) is formed by the positioning elements of a gantry robot.

10. Process for the non-contact recording of vibrations of an object, having the process steps:
- directing at least one measuring beam of at least one laser interferometer onto different measurement points on the object;
- recording the vibration data obtained from the laser interferometer and correlating that vibration data with the positional data of the measurement points;
- displaying and/or evaluating the vibration data correlated with the positional data,
- wherein at least one measuring head of the at least one laser interferometer, which measuring head is mounted on a holding means which is movable under program control, is moved to the measurement points by means of the holding means,
**characterised in that**
the measuring head is moved to the individual measurement points in each case at a pre-selected fixed distance from the object.

11. Process according to claim 10,
**characterised in that**
a video image of the object is generated and the measurement points are selected by reference to the video image.

## Revendications

1. Dispositif de mesure pour la saisie sans contact des vibrations d'un objet,
avec au moins un interféromètre à laser (2, 3),
avec un dispositif de balayage (6, 7, 11) qui pointe le faisceau de mesure (4) de l'interféromètre à laser (2, 3) vers différents points de mesure (5) de l'objet (1) en vue de produire un mouvement de balayage,
avec un dispositif de saisie de données (9) qui collabore avec l'interféromètre à laser (2, 3) et avec le dispositif de balayage (6, 7, 11) pour corréler les données de vibration mesurées par l'interféromètre à laser (2, 3) avec les données locales du point de mesure (5) respectif obtenues par le dispositif de balayage (11),
et avec un dispositif d'évaluation et d'affichage (10) pour l'évaluation ou l'affichage à résolution locale des données de vibration corrélées avec les données locales, le dispositif de balayage comprenant un support (6) mobile commandé par programme sur lequel est fixée au moins une tête de mesure (3) et au moyen duquel la tête de mesure (3) est déplaçable vers les différents points de mesure (5),
**caractérisé par le fait**
**que** le dispositif de balayage (6, 11) est programmé de telle manière que la tête de mesure (3) de l'interféromètre à laser soit approchée chaque fois des différents points de mesure (5) à une distance fixe présélectionnée par rapport à l'objet (1).

2. Dispositif de mesure selon la revendication 1,
**caractérisé par le fait**
**que** l'interféromètre à laser est un vibromètre laser à effet Doppler.

3. Dispositif de mesure selon l'une des revendications 1 ou 2,
**caractérisé par le fait**
**que** le ou les interféromètre(s) à laser génère(nt) pour chaque point de mesure (5) trois faisceaux de mesure (4a, 4b, 4c) arrivant sur l'objet (1) sous trois angles différents.

4. Dispositif de mesure selon les revendications 2 et 3,
**caractérisé par le fait**
**que** ledit au moins un interféromètre à laser est constitué de trois vibromètres laser à effet Doppler.

5. Dispositif de mesure selon l'une des revendications 3 ou 4,
**caractérisé par le fait**
**que** l'angle d'ouverture entre les trois faisceaux de mesure (4a, 4b, 4c) est supérieur à 12°, en particulier supérieur à 20°.

6. Dispositif de mesure selon l'une des revendications 1 à 5,
**caractérisé par le fait**
**que** les données locales des points de mesure (5) présentes dans le dispositif de balayage (11) sont représentables au premier plan d'une image vidéo de l'objet mesuré (1) sur l'unité d'affichage (10).

7. Dispositif de mesure selon la revendication 6,
**caractérisé par le fait**
**que** l'unité d'affichage (10) et le dispositif de balayage (6, 7, 11) sont conçus pour collaborer de telle manière que les données locales des points de mesure (5) présentes dans le dispositif de balayage (11) soient librement présélectionnables à l'aide de l'image vidéo de l'objet mesuré (1).

8. Dispositif de mesure selon l'une des revendications 1 à 7,
**caractérisé par le fait**
**que** le support (6) ou bras support est un robot industriel (7).

9. Dispositif de mesure selon l'une des revendications 1 à 7,
**caractérisé par le fait**
**que** le support (6) est formé des éléments de positionnement d'un robot portique.

10. Procédé pour la saisie sans contact de vibrations d'un objet, comprenant les étapes de procédé suivantes :
- pointage d'au moins un faisceau de mesure d'au moins un interféromètre à laser vers différents points de mesure de l'objet ;
- saisie des données de vibration obtenues par l'interféromètre à laser et corrélation de ces données de vibration avec des données locales des points de mesure ;
- affichage et/ou évaluation des données de vibration corrélées avec les données locales,
- au moins une tête de mesure fixée sur un support mobile commandé par programme dudit au moins un interféromètre à laser étant déplacée vers les points de mesure au moyen du support,
**caractérisé par le fait**
**que** la tête de mesure est approchée chaque fois des différents points de mesure à une distance fixe présélectionnée par rapport à l'objet.

11. Procédé selon la revendication 10,
**caractérisé par le fait**
**qu'**une image vidéo de l'objet est générée et que les points de mesure sont sélectionnés à l'aide de l'image vidéo.
